Europäisches Patentamt

European Patent Office

Office européen des brevets

(11) Veröffentlichungsnummer: **0 249 069 B1**

# (12) EUROPÄISCHE PATENTSCHRIFT

(45) Veröffentlichungstag der Patentschrift: **24.07.91**

(51) Int. Cl.⁵: **G11B 20/10**

(21) Anmeldenummer: **87107370.6**

(22) Anmeldetag: **21.05.87**

(54) **Verfahren und Vorrichtung zur Umwandlung eines binären Signals.**

(30) Priorität: **12.06.86 CH 2384/86**

(43) Veröffentlichungstag der Anmeldung:
**16.12.87 Patentblatt 87/51**

(45) Bekanntmachung des Hinweises auf die
Patenterteilung:
**24.07.91 Patentblatt 91/30**

(84) Benannte Vertragsstaaten:
**CH DE FR GB IT LI**

(56) Entgegenhaltungen:
**US-A- 3 852 809**
**US-A- 4 525 753**
**US-A- 4 562 491**

**IEEE TRANSACTIONS ON COMPUTERS, Band
C-17, Nr. 9, September 1968, Seiten 827-845,
New York, US; T.H. CHEN: "The use of delay
lines in reading a Manchester code"**

**IBM TECHNICAL DISCLOSURE BULLETIN,
Band 17, Nr. 5, Oktober 1974, Seiten
1483-1484, New York, US; T.J. BEAULIEU et
al.: "Data detector with reliability enhancement feature"**

**IBM TECHNICAL DISCLOSURE BULLETIN,**

**Band 24, Nr. 11A, April 1982, Seiten
5348-5349, New York, US; J.A. BAILEY:
"NRZI-double-pulse code conversion"**

**IBM TECHNICAL DISCLOSURE BULLETIN,
Band 26, Nr. 5, Oktober 1983, Seiten
2545-2547, New York, US; N.R. DAVIE et al.:
"Binary linear write equalization"**

**PATENT ABSTRACTS OF JAPAN, Band 9, Nr.
195 (P-379)[1918], 13. August 1985; & JP-A-60
61 904 (TOSHIBA K.K.) 09-04-1985**

(73) Patentinhaber: **STUDER REVOX AG**
**Althardstrasse 30**
**CH-8105 Regensdorf ZH(CH)**

(72) Erfinder: **Piot, Julien**
**198 Allston Street**
**Cambridge 02139 Mass(US)**
Erfinder: **Schneider, Marcel**
**Staffelackerstrasse 31**
**CH-8953 Dietikon ZH(CH)**
Erfinder: **Saner, Thomas**
**Schwandenholzstrasse 260**
**CH-8052 Zürich(CH)**

## Beschreibung

Die Erfindung betrifft ein Verfahren zur Umwandlung eines binaeren ersten Signales mit ersten und zweiten Zustaenden in ein zweites Signal, sowie eine Vorrichtung zur Durchfuehrung des Verfahrens. Das Verfahren wird vorzugsweise bei der Aufzeichnung binaerer Signale auf einem magnetischen Aufzeichnungstraeger verwendet.

Auf dem Gebiete der elektrischen Signalverarbeitung sind binaere Signale bestens bekannt. Als modulierte binaere Signale sind Signale bekannt, bei denen Impulse gleicher Laenge oder Zeitdauer in unterschiedlichen Abstaenden aufeinandefolgen. Andere modulierte binaere Signale weisen Impulse auf, deren Laenge oder Zeitdauer nicht konstant ist. Bei solchen Signalen ist es wichtig, den Anfang und das Ende des Impulses, also die Impulsflanken zu erkennen. Bei der digitalen Aufzeichnung eines solchen Signales auf einem Magnetband werden somit Impulse aufgezeichnet, indem ein entsprechender Schreibstrom einem Aufnahmekopf zugefuehrt wird. So wird die Polaritaet der Magnetisierung auf dem Magnetband ueber die Laenge des Magnetbandes so varaendert, dass ein Abbild der dem Aufnahmekopf zugefuehrten Stromimpulse entsteht. Einem Impuls einer bestimmten Dauer entspricht auf dem Magnetband ein Bereich einer bestimmten Laenge, dessen Magnetisierung eine bestimmte Polaritaet aufweist. Einem nicht vorhandenen Impuls, also einem Abschnitt zwischen zwei aufeinanderfolgenden Impulsen, entspricht auf dem Magnetband ein anderer Bereich, einer bestimmten Laenge, dessen Magnetisierung eine andere Polaritaet aufweist. Die Flanken der Impulse bewirken somit den Wechsel zwischen zwei Polaritaeten auf dem Magnetband. Im Aufnahmekopf bedeutet dies, dass der Schreibstrom fuer die Impulse einmal in der einen Richtung und anschliessend in der anderen Richtung fliesst. Im Mittel ueber eine laengere Zeit betrachtet fliesst somit im Aufnahmekopf ein bestimmter Strom, der auch eine Erwaermung des Aufnahmekopfes zur Folge hat.

Der Nachteil dieser bekannten Loesung besteht darin, dass bei der Verarbeitung solcher binaerer Signale beispielsweise in Aufnahmekoepfen, die fuer mehrere Spuren auf dem Magnetband vorgesehen sind, diese durch die Schreibstroeme fuer alle Spuren zusammen erwaermt werden. Die staerkere Erwaermung vermindert die Lebensdauer solcher Aufnahmekoepfe oder Elemente. Der Schreibstrom erzeugt aber auch eine Verlustleistung in der Kopfelektronik, die dem Aufnahmekopf vorgeschaltet ist.

Aus der Patentschrift US 4,562,491 ist ferner ein Verfahren und eine Vorrichtung bekannt, mit denen Signale zur Aufzeichnung auf mehreren Spuren auf einem Aufzeichnungstraeger aufbereitet werden. Dies geschieht, indem die einzelnen Impulse eines Eingangssignales in eine variable Anzahl sehr kurzer Impulse umgewandelt werden. Dabei sind zwei Polaritaeten fuer die kurzen Impulse vorgesehen. Den Flanken der Impulse des Eingangssignales sind im aufgezeichneten Signal kurze Impulse zugeordnet und die kurzen Impulse sind zueinander versetzt, wenn sie auf benachbarten Spuren auf dem Aufzeichnungstraeger aufgezeichnet werden.

Der Nachteil dieses Verfahrens besteht darin, dass damit nur solche Eingangssignale fuer die Aufzeichnung vorbereitet werden koennen, bei denen die Flanken an gewissen vorbekannten Stellen auftreten koennen, oder deren Impulslaenge nur bestimmte diskrete Werte haben kann. Das bedeutet, dass ein Raster vorgegeben ist, in dem diese Impulsflanken auftreten koennen und in dem auch die daraus abgeleiteten kurzen Impulse angeordnet werden. Daraus folgt, dass auch die kurzen Impulse untereinander nur bestimmte Abstaende aufweisen duerfen. Die Verarbeitung von pulsdauermodulierten Eingangssignalen ist auf diese bekannte Weise nicht moeglich. Nur bestimmte binaere Signale lassen sich so fuer eine Aufzeichnung aufbereiten.

Die Erfindung wie sie in den Patentanspruechen gekennzeichnet ist, loest die Aufgabe, ein Verfahren und eine Vorrichtung zu schaffen, die es erlauben die Erwaermung in Elementen, in die ein beliebiges binaeres Signal eingeleitet wird, zu verringern.

Die Aufgabe wird dadurch geloest, dass das beliebige binaere Signal, welches Elementen beispielsweise zur Aufzeichnung zugefuehrt wird, zuerst in ein zweites Signal umgewandelt wird, welches aus kurzen Impulsen besteht, die in regelmaessigen Abstaenden aufeinenderfolgen und die Polaritaet des entsprechenden Zustandes des ersten Signales aufweisen und bei dem zusaetzliche weitere kurze Impulse vorgesehen sind, die den Ort des Ueberganges zwischen den beiden Polaritaeten genau angeben. Dadurch ergeben sich die angestrebten Vorteile wie geringere Erwaermung und geringere Verlustleistung. Das zweite Signal, das beispielsweise fuer die Aufzeichnung verwendet wird, kann zudem durch geeignete Dimensionierung so gestaltet werden, dass nach der Aufzeichnung auf dem Magnetband ein Signal vorliegt, das dem urspruenglichen binaeren Signal entspricht. Dadurch entfallen zusaetzliche Massnahmen fuer die Verbesserung dieses Signales bei der Wiedergabe vom Magnetband. Das erfindungsgemaesse Verfahren und die Vorrichtung eignen sich insbesondere auch zur Aufzeichnung von pulsdeltamodulierten und pulsdauermodulierten Signalen.

Im folgenden wird die Erfindung anhand von lediglich einen Ausfuehrungsweg darstellenden Zeichnungen naeher erlaeutert. Es zeigt

Figur 1a bis 1f verschiedene, teils voneinander abhaengige Signale,

Figur 2 ein Blockschema einer erfindungsgemaessen Vorrichtung,

Figur 3 einen Teil der Vorrichtung,

Figur 4a bis c Signale im Zusammenhang mit der Vorrichtung gemaess Figur 3,

Figur 5 einen weiteren Teil der Vorrichtung,

Figur 6a bis e weitere, teils voneinander abhaengige Signale,

Figur 7 weitere spezielle Ausbildungen der Signale,

Figur 8 schematisch einen Aufnahmekopf zusammen mit einem Signal und

Figur 9a und 9b schematisch dargestellt die Magnetisierung auf einem magnetischen Aufzeichnungstraeger.

Figur 1a zeigt ein erstes binaeres Signal 1 das einen ersten Zustand 2 und einen zweiten Zustand 3 aufweist, die durch Flanken 4 und 5 voneinander getrennt sind. Die Zustaende 2 und 3 koennen auch als Impulse einer gewissen aber beliebigen Laenge aufgefasst werden.

Figur 1b zeigt ein Taktsignal 6, das aus einer Folge von Impulsen 7 besteht, die gleiche raeumliche oder zeitliche Abstaende 8 zueinander aufweisen.

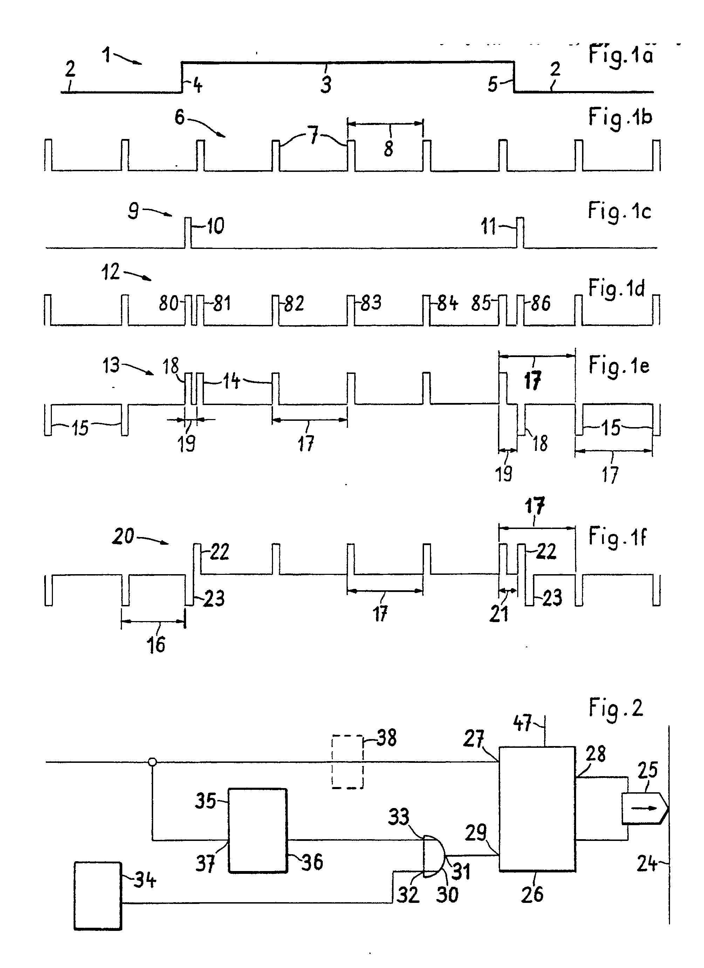

Figur 1c zeigt eine Impulsfolge 9, die aus dem ersten Signal 1 abgeleitet ist. Jeder Flanke 4, 5 entspricht ein Impuls 10, 11.

Figur 1d zeigt ein Steuersignal 12, das aus dem Taktsignal 6 und der Impulsfolge 9 zusammengesetzt ist.

Figur 1e zeigt ein zweites Signal 13 welches aus positiven kurzen Impulsen 14 und negativen kurzen Impulsen 15 zusammengesetzt ist. Das zweite Signal 13 enthaelt Impulse 14, 15 mit einem ersten Abstand 17 zueinander und zusaetzliche Impulse 18, die zu den Impulsen 14, 15 einen verkuerzten zweiten Abstand 19 aufweisen. Die Impulse 18 im zweiten Signal 13 entsprechen den Flanken 4, 5 im ersten Signal 1. Die zusaetzlichen Impulse 18 weisen dabei immer die Polaritaet der nachfolgenden Impulse auf.

Figur 1f zeigt eine weitere Ausfuehrung eines zweiten Signales 20, bei der den Flanken 4, 5 des ersten Signales 1 positive und negative Impulse 22, 23 entsprechen. Der erste dieser beiden Impulse hat immer die Polaritaet der vorausgehenden Impulse. Die Abstaende 16 oder 21 dieser Impulse zum vorausgehenden Impuls sind im Vergleich zum ersten Abstand 17 verkuerzt. Das gleiche gilt fuer den Abstand zum nachfolgenden Impuls.

Figur 2 zeigt eine schematische Darstellung der erfindungsgemaessen Vorrichtung. Man erkennt dabei ein Magnetband 24, einen Aufnahmekopf 25 und einen Verstaerker 26. Dieser weist einen Eingang 27 fuer das erste Signal und einen Ausgang 28 fuer das zweite Signal auf. Ein zweiter Eingang 29 ist mit dem Ausgang 31 eines ODER-Tores 30 verbunden. Der eine Eingang 32 des Tores 30 ist mit einem Taktgenerator 34 und der andere Eingang 33 ist mit einem Ausgang 36 eines Impulsgenerators 35 verbunden, dessen Eingang 37 das erste Signal 1 erhaelt. Wahlweise kann dem Eingang 27 des Verstaerkers 26 eine Verzoegerungseinheit 38 fuer das erste Signal vorgeschaltet sein. Eine Leitung 47, die am Verstaerker 26 angeschlossen ist, fuehrt ihm eine Gleichspannung zu.

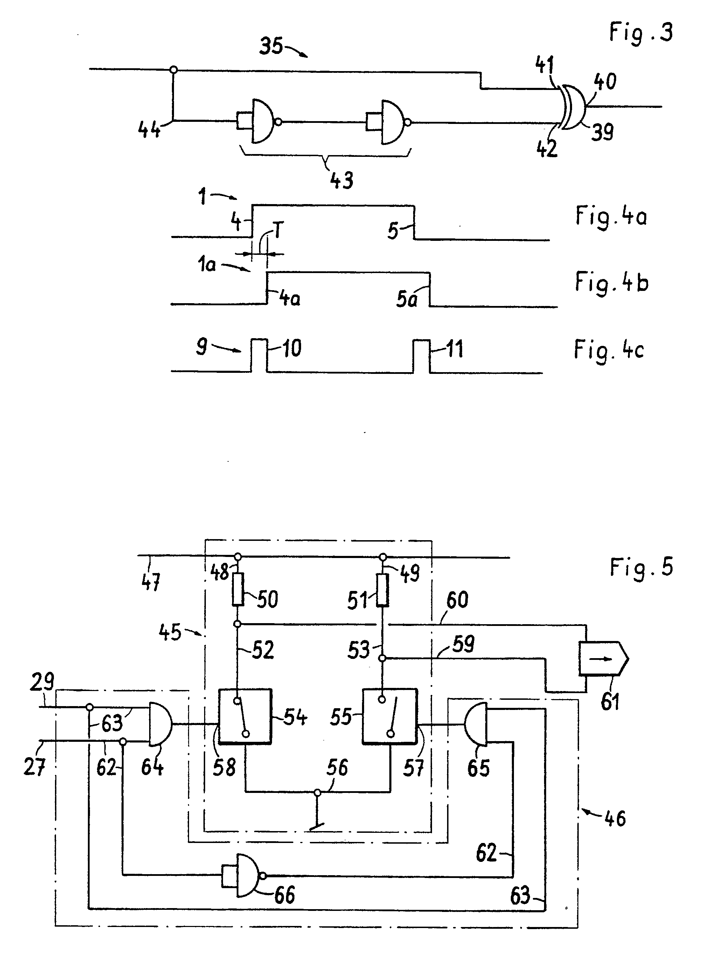

Figur 3 zeigt ein Ausfuehrungsbeispiel fuer den Impulsgenerator 35. Dieser besteht im wesentlichen aus einem exklusiv ODER-Tor 39 mit einem Ausgang 40 und zwei Eingaengen 41 und 42. Dem Eingang 42 ist eine Verzoegerungsstufe 43 vorgeschaltet, an deren Eingang 44, wie auch am Eingang 41 das erste Signal 1 anliegt.

Figur 4a zeigt wieder ein erstes Signal 1 mit Flanken 4 und 5. Dieses liegt an den Eingaengen 41 und 44 an.

Figur 4b zeigt ein verzoegertes Signal 1a mit Flanken 4a und 5a, wie es am Eingang 42 des exklusiv ODER-Tores 39 anliegt.

Figur 4c zeigt eine Impulsfolge 9, mit Impulsen 10 und 11 wie sie bereits aus der Figur 1c bekannt ist.

Figur 5 zeigt ein moegliches Ausfuehrungsbeispiel eines Verstaerkers 26, der im wesentlichen aus einer Schaltung 45 zur Steuerung der Stromrichtung, welcher eine Steuerschaltung 46 vorgeschaltet ist, besteht. Die Schaltung 45 ist an eine Speiseleitung 47, an der beispielsweise eine in an sich bekannter Weise einstellbare Speisespannung als Gleichspannung anliegt, angeschlossen. Zwei Abgriffe 48 und 49 muenden in je einen Widerstand 50, 51, welche ueber je eine Leitung 52, 53 einerseits mit je einem Schaltelement 54, 55 verbunden sind. Diese sind andererseits ueber eine Leitung 56 mit der Erde oder einem anderen Potential verbunden und weisen zudem je einen Eingang 57 und 58 fuer ein Steuersignal auf. Ausgaenge 59 und 60 der Schaltung 45 sind mit den Leitungen 53 und 52 verbunden und dienen als Anschluesse fuer einen Aufnahmekopf 61. Die Steuerschaltung 46 ist an die Eingaenge 27 und 29 des Verstaerkers 26 angeschlossen, welche ueber Leitungen 62 und 63 mit je einem UND-Tor 64 und 65 verbunden sind. Deren Ausgaenge muenden in die Eingaenge 58 und 57 der Schaltelemente 54 und 55. In die Leitung 62, welche mit dem Eingang 27 verbunden ist, ist zwischen den Toren 64 und 65 ein Inverter 66 eingeschaltet.

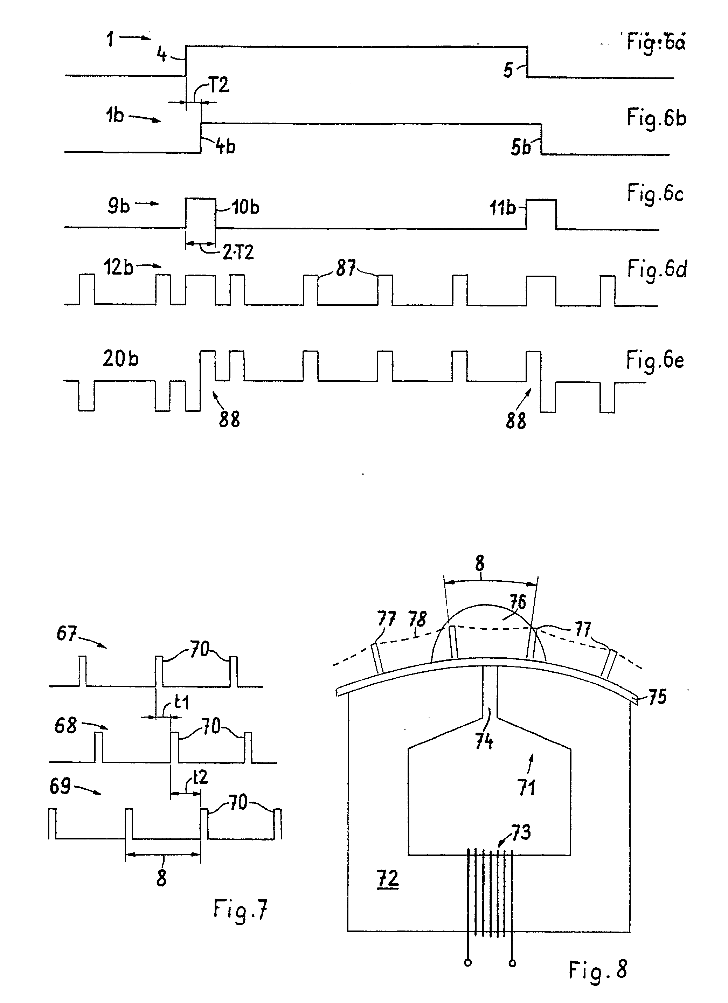

Die Figuren 6a bis 6e zeigen Signale, die verwendet werden, wenn die erfindungsgemaesse Vorrichtung mit einer Verzoegerungseinheit 38 versehen ist. Dabei zeigt Figur 6a wiederum in bekannter Weise das erste Signal 1 und Figur 6b zeigt das verzoegerte Signal 1, welches hier mit 1b bezeichnet ist. Dabei ist die Verzoegerung nur etwa halb so gross wie fuer das Signal 1a aus Figur 4b.

Figur 6c zeigt eine Impulsfolge 9b welche aus Impulsen 10b, 11b usw zusammengesetzt ist.

Figur 6d zeigt ein Steuersignal 12b, das entsprechend dem Steuersignal 12 aus einem Taktsignal und aus der Impulsfolge 9b zusammengesetzt ist.

Figur 6e zeigt ein zweites Signal 20b entsprechend Figur 1f.

Figur 7 zeigt Abschnitte von drei zweiten Signalen 67, 68 und 69 deren Impulse 70 einen ersten Abstand 8 zueinander aufweisen und von denen jedes Signal 67, 68 und 69 beispielsweise fuer die Aufzeichnung auf einer eigenen Spur auf einem Magnetband vorgesehen ist. Die Impulse 70 des Signales 67 sind aber zeitlich zu den Impulsen 70 der Signale 68 um t1 versetzt. Ebenso sind die Impulse der Signale 68 und 69 zueinander um t2 versetzt. Durch diese Massnahme kann die Uebersprechdaempfung zwischen den einzelnen Spuren erhoeht werden.

Figur 8 zeigt in vereinfachter Darstellung einen Aufnahmekopf 71 mit einem Kern 72 und einer Erregerwicklung 73. Ueber einem Spalt 74 erstreckt sich in bekannter Weise ein Magnetfeld, das in einer Aufzeichnungszone 76 genuegend wirksam ist, um die Magnetisierung auf einem Magnetband 75 in an sich bekannter Weise zu beeinflussen. Impulse 77 eines zweiten Signales sind dabei zum Vergleich eingezeichnet. Die Art der Darstellung dieser Impulse vor dem Spalt entspricht aber nicht den wirklichen Verhaeltnissen. Es soll damit lediglich sichtbar gemacht werden, dass der Abstand 8 zwischen den Impulsen 77 kleiner ist als die Ausdehnung der Aufzeichnungszone 76 vor dem Spalt 74. Das fuehrt dazu, dass die Magnetisierung auf dem Magnetband 75 nicht den Impulsen 77, sondern eher einem Verlauf entspricht, wie er durch die Kurve 78 dargestellt wird. Das bedeutet, dass die Magnetisierung weitgehend wieder den Zustaenden entsprechend dem Signal 1 erfolgt.

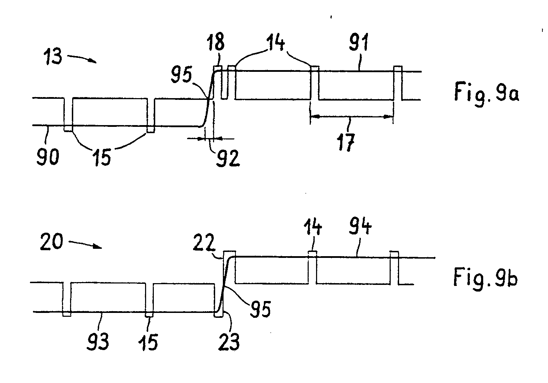

Figur 9a zeigt die Magnetisierung die auf einem magnetischen Aufzeichnungstraeger entsteht, wenn beispielsweise das Signal 13 gemaess Figur 1e auf einem solchen Aufzeichnungstraeger aufgezeichnet wird. Die negativen Impulse 15 ergeben eine Magnetisierung mit der einen Polaritaet, wie sie durch die Linie 90 angegeben ist. Die positiven Impulse 14 ergeben eine Magnetisierung mit der anderen Polaritaet, wie sie durch die Linie 91 angegeben ist. Dabei ist zu beachten, dass die Magnetisierung zwischen den einzelnen Impulsen 14, 15 nicht veraendert wird. Wenn die Impulse 14, 15 nicht zu weit auseinanderliegen, bleibt die Magnetisierung zwischen den Impulsen und auch ueber die Impulse hinaus erhalten. Die Magnetisierung aendert ihre Polaritaet erst wenn ein Impuls 18 mit der anderen Polaritaet auftritt. Die Magnetisierung die durch die vorausgehenden Impulse bewirkt wurde, wird schlimmstenfalls nur auf sehr kurze Distanz 92 im Vergleich zu einem Abstand 17, rueckwirkend veraendert. Deshalb muss nicht unbedingt ein negativer Impuls unmittelbar vor dem ersten positiven Impuls vorgesehen werden.

Figur 9b zeigt nochmals das zweite Signal 20 gemaess Figur 1f mit unmittelbar aufeinanderfolgenden Impulsen 23, 22 entgegengesetzter Polaritaet. Linien 93 und 94 geben ebenfalls die entsprechende Magnetisierung des Aufzeichnungstraegers als Folge der Impulse 15 und 14 an. Fuer beide Signale 13 und 20 liegt der Uebergang der Magnetisierung, der mit 95 bezeichnet ist etwa an der gleichen Stelle in bezug auf die Impulse 14 und 15.

Das erfindungsgemaesse Verfahren besteht nun darin, das erste Signal 1 gemaess Figur 1a so umzuwandeln, dass daraus ein zweites Signal 13, 20 gemaess der Figur 1e oder 1f entsteht. Dazu werden die Zustaende 2 und 3 in eine Folge von kurzen Impulsen 14, mit den Zustaenden 2 und 3 zugeordneten Polaritaeten, umgewandelt. Im Bereiche der Flanken 4 und 5 des ersten Signales entstehen dabei Impulse 18 mit verkuerzten Abstaenden 19 zum naechstliegenden Impuls. Um zum zweiten Signal gemaess Figur 1e zu gelangen, koennen beispielsweise weitere Signale gemaess den Figuren 1b, c und d verwendet werden. Dies kann anhand der Funktionsweise der Vorrichtung gemaess Figur 2 erlaeutert werden.

In der Anwendung fuer ein Magnetbandaufzeichnungsgeraet wird an die Eingaenge 27 und 37 ein erstes Signal 1 angelegt, welches beispielsweise fuer eine Zeitcodespur, eine Hilfsspur oder eine Audio-Spur vorgesehen ist. Der Impulsgenerator 35 erzeugt eine Impulsfolge 9 (Fig. 1c) mit Impulsen 10, 11 die von jeder Flanke 4, 5 ausgeloest werden. Diese Impulsfolge 9 wird dem Eingang 33 des ODER-Tores 30 zugefuehrt. Dem Eingang 32 des ODER-Tores 30 wird das Taktsignal 6 (Fig. 1b) aus dem Taktsignalgenerator 34 zugefuehrt. Das ODER-Tor 30 laesst alle Impulse aus beiden Eingaengen 32 und 33 am Ausgang 31 wieder austreten. So entsteht ein Steuersignal 12 mit Impulsen 14 mit gleichen Abstaenden, die durch Impulse 80, 81 oder 85, 86 mit verkuerzten Abstaenden unterbrochen sind. Der Verstaerker 26 arbeitet so, dass immer nur dann das erste Signal 1, das am Eingang 27 anliegt, eingelassen oder beruecksichtigt wird, wenn ein Impuls am Eingang 29 anliegt. Die Richtung des Stromes am Ausgang 28, also des Schreibstromes fuer den Aufnahmekopf 25 aendert aber je nach dem das erste Signal 1 gerade den ersten oder den zweiten Zustand 2 oder 3 aufweist.

Wie die Figur 1e zeigt, entspricht beispielsweise dem ersten Zustand 2 eine negative Polaritaet mit negativen Impulsen 15 und somit eine entsprechende Richtung des Schreibstromes am Ausgang 28. Entsprechend gilt fuer den zweiten Zustand 3, dass fuer die positiven Impulse 14 die entgegengesetzte Richtung des Schreibstromes vorgesehen ist.

Die Funktionsweise des Impulsgenerators 35 laesst sich mit Hilfe der Figuren 3 und 4 erklaeren. An den Eingaengen 41 und 44 liegt das erste Signal 1 gemaess Figur 4a an. Die Verzoegerungsstufe 43 bewirkt eine Verzoegerung des ersten Signales 1 um eine Zeit T und es entsteht ein Signal 1a, das an den Eingang 42 des exklusiv ODER Tores 39 angelegt wird. Am Ausgang 40 des exklusiv ODER Tores 39 erscheint die Impulsfolge 9 gemaess Figur 4c.

Aus der Figur 5 laesst sich die Funktionsweise des Verstaerkers 26 mindestens insofern ableiten, als es nicht um die an sich bekannte eigentliche Verstaerkung des Signales geht. Man geht davon aus, dass an der Speiseleitung 47 eine Speisespannung anliegt, die so eingestellt werden kann, dass sich die gewuenschte Verstaerkung ergibt und dass am Eingang 27 das erste Signal 1 gemaess Figur 1 und am Eingang 29 das Steuersignal 12 gemaess Figur 1d anliegt. In den UND-Toren 64 und 65 werden die Signale 1 und 12 kombiniert und mit dem dabei entstandenen Signal an den Eingaengen 57 und 58 werden die Schaltelemente 54 und 55 gesteuert. Gemaess den Gesetzen die fuer ein UND-Tor gelten erhaelt man am Eingang 58 ein Signal, das aus den Impulsen des Signales 12 besteht, solange das erste Signal 1 den zweiten Zustand 3 aufweist. Weist es den ersten Zustand 2 auf, so liegt kein Signal am Eingang 58 an. Waehrend den Impulsen 80 bis 85 des Steuersignales 12 leitet somit das Schaltelement 54 und das Schaltelement 55 leitet nicht, da fuer dieses der zweite Zustand 3 des ersten Signales 1 invertiert ist. Der Strom fliesst von der Speiseleitung 47 ueber die Widerstaende 50, 51, die Leitungen 52, 53, das Schaltelement 54 und die Leitung 56 zur Erde. Da die Impedanz des Aufnahmekopfes 61 sehr klein ist im Vergleich zum Widerstand 50 oder 51, fliesst auch ein Strom ueber den Ausgang 59 zum Aufnahmekopf 61. Vom Impuls 86 des Steuersignales 12 an leitet das Schaltelement 54 nicht mehr aber das Schaltelement 55 leitet, wenn das Steuersignal 12 einen Impuls abgibt. Dann fliesst ein Strom von der Speiseleitung 47 ueber die Widerstaende 50, 51, die Leitungen 52, 53, das Schaltelement 55 und die Leitung 56 zur Erde. Es fliesst dabei auch ein Strom ueber den Ausgang 60 und den Aufnahmekopf 61. Zwischen den Impulsen des Steuersignales 12 fliesst kein Strom, da beide Schaltelemente 54 und 55 nicht leiten.

Ist dem Eingang 27 der Vorrichtung gemaess Figur 2 fuer das erste Signal 1 eine Verzoegerungsschaltung 38 vorgeschaltet, so liegt dort das Signal 1b an, das um eine Zeit T2 gegenueber dem Signal 1 verzoegert ist. Der Taktsignalgenerator 34 gibt in bekannter Weise eine Impulsfolge mit Impulsen 87 wie sie auch im Steuersignal 12b vorkommen ab. Beim Auftreten der Flanken 4, 5 des Signales 1 erzeugt der Impulsgenerator 35 in bekannter Weise eine Impulsfolge 9b mit Impulsen 10b, 11b der Laenge 2T2. Diese Laenge der Impulse wird durch die Verzoegerungsstufe 43 vorgegeben. Im ODER-Tor 30 wird aus der Impulsfolge 9b und aus dem Taktsignal das Steuersignal 12b erzeugt. Der Verstaerker 26 erzeugt daraus und aus dem Signal 1b ein zweites Signal 20b wie dies die Figur 6e zeigt. Dabei steuert das Signal 1b die Polaritaet der Impulse die das Steuersignal 12b liefert, so dass das Signal 20b entsteht. Das Signal 20b weist immer dann ein Impulspaar 88 mit zwei unmittelbar aufeinanderfolgenden Impulsen auf, wenn das erste Signal 1 eine Flanke aufweist. Um ein Signal 20 gemaess Figur 1f oder ein Signal 20b gemaess Figur 6e mit zwei aufeinanderfolgenden Impulsen unterschiedlicher Polaritaet zu erzeugen, wobei der erste Impuls die alte und der zweite Impuls die neue Polaritaet aufweist, braucht es die Verzoegerungseinheit 38 gemaess Figur 2. Die Verzoegerung des ersten Signales 1b um T2 ergibt Impulse 10b, 11b im Signal 9b, die es dann erlauben waehrend diesen Impulsen im Signal 20b die beiden Impulse mit entgegengesetzter Polaritaet unterzubringen.

**Patentansprüche**

1.  Verfahren zur Umwandlung eines binaeren ersten Signales (1) mit ersten und zweiten Zustaenden (2, 3), die Impulse beliebiger Laenge bilden, in ein zweites Signal (13, 20, 20b) mit Impulsen (14) einer ersten, dem ersten Zustand (2) des ersten Signales (1) zugeordneten, Polaritaet und Impulsen (15) einer zweiten, dem zweiten Zustand (3) des ersten Signales (1) zugeordneten, Polaritaet, wobei die Impulse (14, 15) des zweiten Signales mit ersten, unter sich gleichen, Abstaenden (17) vorgesehen werden, dadurch gekennzeichnet, dass weitere Impulse (18, 22, 23) in beliebig verkuerzten zweiten Abstaenden (16, 19, 21) zu den Impulsen mit den ersten Abstaenden vorgesehen werden, die einen Uebergang zwischen beiden Polaritaeten angeben.

2.  Verfahren gemaess Anspruch 1 , dadurch gekennzeichnet, dass aus dem ersten Signal (1) eine Impulsfolge (9) derart abgeleitet wird, dass beim Uebergang des ersten Signales (1) von einem Zustand (2, 3) in den anderen ein Impuls (10, 11) der Impulsfolge (9) erzeugt wird, dass diese Impulsfolge (9) mit einem Taktsignal (6) mit Impulsen in gleichen ersten Abstaenden kombiniert wird, wobei als Resultat dieser Kombination ein Steuersignal (12) entsteht mit dem zusammen mit dem ersten Signal (1) ein Gleichstromsignal moduliert wird, wobei das zweite Signal (13, 20, 20b) mit Impulsen in ersten und zweiten Abstaenden entsteht.

3. Verfahren gemaess Anspruch 1, dadurch gekennzeichnet, dass einem Impuls (18, 22, 23) der einen Polaritaet, die der Polaritaet vorausgehender Impulse entspricht, unmittelbar nachfolgend ein Impuls (23, 22) der anderen Polaritaet zugeordnet wird, der die Polaritaet der nachfolgenden Impulse aufweist.

4. Verfahren gemaess Anspruch 2, dadurch gekennzeichnet, dass aus dem Steuersignal (12) und dem ersten Signal (1) das zweite Signal (13, 20, 20b) erzeugt wird, indem die Polaritaet der Impulse des Steuersignales (12) dann veraendert wird, wenn das erste Signal (1) vom einen Zustand (2, 3) in den anderen Zustand (3, 2) wechselt.

5. Verfahren gemaess Anspruch 1, dadurch gekennzeichnet, dass das zweite Signal (13, 20, 20b) auf einem magnetischen Aufzeichnungstraeger aufgezeichnet wird und dass Impulse (15) mit der ersten Polaritaet eine Magnetisierung bewirken, die solange und soweit erhalten wird, bis der erste Impuls (18, 22) der Impulse (14, 15, 18, 22) mit der zweiten Polaritaet auftritt.

6. Vorrichtung zur Durchfuehrung des Verfahrens gemaess Anspruch 1, gekennzeichnet durch einen Verstaerker (26) mit einem ersten Eingang (27) fuer das erste Signal (1), einem Ausgang (28) fuer das zweite Signal (13, 20), einem zweiten Eingang (29) fuer ein Steuersignal (12), sowie einem Anschluss (47) fuer eine Speisespannung, wobei der zweite Eingang (29) mit einem Taktsignalgenerator (34) und mit einem Impulsgenerator (35) verbunden ist, welcher Impulsgenerator einen Eingang (37) fuer das erste Signal (1) aufweist und beim Zustandswechsel des ersten Signales (1) einem Impuls erzeugt.

7. Vorrichtung gemaess Anspruch 6, dadurch gekennzeichnet, dass der Verstaerker (26) eine Schaltung (45) zur Steuerung der Stromrichtung am Ausgang (28) aufweist und dass dieser Schaltung (45) eine Steuerschaltung (46) vorgeschaltet ist, die die Schaltung (45) zur Steuerung der Stromrichtung betaetigt.

8. Verfahren gemaess Anspruch 1, dadurch gekennzeichnet, dass Impulse (77), welche das zweite Signal (13, 20, 20b) bilden, auf einem Aufzeichnungstraeger (75) aufgezeichnet werden, um das erste Signal (1) zu speichern.

9. Verfahren gemaess Anspruch 8, dadurch gekennzeichnet, dass die Impulse (14, 15) mit ersten Abstaenden des zweiten Signales (13, 20, 20b) in einem Abstand (8) zueinander folgen, der kleiner ist als die Laenge einer Aufzeichnungszone (76) eines Aufnahmekopfes (71).

**Claims**

1. Method for converting a binary first signal (1) which assumes a first state (2) and a second state (3) corresponding to pulses of variable length, into a second signal (13, 20, 20b) comprising pulses (14) of a first polarity according to the first state (2) and comprising pulses (15) of a second polarity according to said second state (3) of said first signal (1), whereas the pulses (14, 15) of the second signal are separated by equal first spacings (17), characterised by additional pulses (18, 22, 23) indicating a transition between two polarities and having shortened second spacings (16, 19, 21) with respect to said pulses having said first spacings.

2. Method according to claim 1, characterised by deriving from the first signal (1) a sequence (9) of pulses whereas a pulse (10, 11) of the sequence (9) is produced when the transition between the first state (2) and the second state (3) in said signal (1) takes place, whereas said sequence (9) is combined with a clock signal (6) having pulses with equal first spacings resulting in a control signal (12) which is used together with said first signal to modulate a d.c. signal thereby producing said second signal (13, 20, 20b) composed of pulses having said first and second spacings.

3. Method according to claim 1, characterised by associating a pulse (23, 22) of the opposite polarity and corresponding to the polarity of the following pulses to a pulse (18, 22, 23) of a polarity corresponding to the polarity of preceding pulses.

4. Method according to claim 2, characterised by producing the second signal (13, 20, 20b) from the control signal (12) and from the first signal (1) by changing the polarity of the pulses of the control signal (12) when the first signal (1) changes between states (2, 3).

5. Method according to claim 1, characterised by recording the second signal (13, 20, 20b) on a magnetic record carrier and by producing a magnetization by pulses having the first polarity which magnetization is maintained until the first pulse (18, 22) of pulses (14, 15, 18, 22) having a second polarity appears.

6. Device for carrying out the method according to claim 1, characterised by an amplifier (26) having a first input (27) for receiving said first signal (1), having an output (28) for said second signal (13, 20), having a second input (29) for receiving a control signal (12) and having a connection (47) for receiving a supply voltage and whereas said second input (29) is connected to a clock signal generator (34) and to a pulse generator (35) having an input (37) for receiving said first signal (1) and which generates a pulse upon the occurrence of transitions between first and second states of said first signal (1).

7. Device according to claim 6, characterised by said amplifier (26) comprising a circuit means (45) for controlling the direction of the current flow at the output (28) and by a control circuit (46) which is series connected to said circuit means (45) for actuating the circuit means (45).

8. Method according to claim 1, characterised by pulses (77) of which said second signal (13, 20, 20b) is composed that are recorded on a record carrier (75) for storing said first signal (1).

9. Method according to claim 8, characterised by pulses (14, 15) of said second signal (13, 20, 20b) having first spacings (8) which are smaller than the extent of a recording zone (76) of a recording head (71).

**Revendications**

1. Méthode pour convertir un premier signal binaire (1) qui a une première et une seconde valeur (2, 3), qui constituent des impulsions de longueur variable, en un second signal (13, 20, 20b) qui a des impulsions (14) avec une polarité qui correspond à la première valeur (2) du premier signal (1) et des impulsions (15) avec une polarité qui correspond à la seconde valeur (3) du premier signal (1) et où les impulsions (14, 15) du second signal sont séparées par des premiers espaces (17) égaux, caractérisée en ce que d'autres impulsions (18, 22, 23) sont placées à des seconds espaces (16, 19, 21) des impulsions à espaces égaux où ces seconds espaces sont raccourcis à volonté et où ces autres impulsions indiquent une transition entre les deux polarités.

2. Méthode selon la revendication 1, caractérisée en ce que une suite d'impulsions (9) est dérivée du premier signal (1) de telle manière qu'à la transition entre les valeurs (2, 3) du premier signal (1) une impulsion (10, 11) de la suite (9) est produite, que la suite d'impulsions (9) est combinée avec un signal horloge (6) qui a des impulsions à intervalles égaux et où le résultat de cette combinaison est un signal de commande (12) qui sert à moduler un signal à courant continu ensemble avec le premier signal (1) et où le second signal (13, 20, 20b) est crée avec des impulsions séparées par des premiers et seconds espaces.

3. Méthode selon la revendication 1, caractérisée en ce qu'une impulsion (18, 22, 23) avec une polarité qui correspond à celle des impulsions précédentes est associée à une impulsion (22, 23) immédiatement succédente avec la polarité des impulsions succédentes.

4. Méthode selon la revendication 2, caractérisée en ce que le second signal (13, 20, 20b) est fait à partir du signal de commande (12) et du premier signal (1) en changeant la polarité des impulsions du signal de commande (12) au moment où le premier signal (1) passe d'une valeur (2, 3) à l'autre valeur (3, 2).

5. Méthode selon la revendication 1, caractérisée en ce que le second signal (13, 20, 20b) est enregistré sur un support magnétique et en ce que des impulsions (15) avec une première polarité créent une magnétisation qui se maintient jusqu'à l'apparition de la première impulsion (18, 22) des impulsions (14, 15, 18, 22) qui ont la seconde polarité.

6. Appareil pour exécuter la méthode selon la revendication 1, caractérisé par un amplificateur (26) pourvu d'une première entrée (27) pour le premier signal (1), d'une sortie (28) pour le second signal (13, 20), d'une seconde entrée (29) pour un signal de commande (12) et d'une entrée (47) pour une tension d'alimentation et où la seconde entrée (29) est reliée à un générateur (34) de signal horloge et à un générateur (35) d'impulsions qui a une entrée (37) pour le premier signal (1) et qui produit une impulsion lorsque le premier signal change de valeur.

7. Appareil selon la revendication 6, caractérisé en ce que l'amplificateur (26) contient un circuit (45) pour commander la direction du courant à la sortie (28) et en ce qu'un circuit de commande (46) est placé en série avant le cicuit (45) pour commander la direction du courant.

8. Méthode selon la revendication 1, caractérisée en ce que les impulsions (77) dont est composé le second signal (13, 20, 20b) sont enregistrées sur un support d'enregistrement (75) afin de mémoriser le premier signal (1).

9. Méthode selon la revendication 8, caractérisée en ce que les impulsions (14, 15) du second signal (13, 20, 20b) sont séparées par des espaces (8) qui sont inférieurs à la longueur d'une zone (76) d'enregistrement d'une tête d'enregistrement (71).

Fig.1a

Fig.1b

Fig.1c

Fig.1d

Fig.1e

Fig.1f

Fig.2

Fig.3

Fig.4a

Fig.4b

Fig.4c

Fig.5

Fig.6a

Fig.6b

Fig.6c

Fig.6d

Fig.6e

Fig.7

Fig.8

Fig.9a

Fig.9b